## Europäisches Patentamt
## European Patent Office
## Office européen des brevets

(19)

(11) Publication number: **0 011 509**
**B1**

(12)

# EUROPEAN PATENT SPECIFICATION

(45) Date of publication of patent specification: **22.12.82**

(51) Int. Cl.³: **C 08 F 10/00, C 08 F 4/64**

(21) Application number: **79302626.1**

(22) Date of filing: **19.11.79**

(54) Olefin polymerisation catalyst component and polymerisation process employing it.

(30) Priority: **17.11.78 GB 4501578**

(43) Date of publication of application:
**28.05.80 Bulletin 80/11**

(45) Publication of the grant of the patent:
**22.12.82 Bulletin 82/51**

(84) Designated Contracting States:
**BE DE IT NL**

(56) References cited:
**US - A - 3 392 159**

**MACROMOLECULES, vol. 11, no. 3, May—June 1978, Bell Laboratories, Murray, Hill, New Jersey US YASUDA, H., NAKANO, Y., NATSUKAWA, K., TANI, H.: "Magnesium-Assisted Stereospecific Oligomerization of Isoprene. Unique Chemical Behaviors of Magnesium-Isoprene Adducts (Mg(C5H8)m)n". pages 586—592**

(73) Proprietor: **ENOXY CHEMICAL LIMITED**
**Charleston Road**
**Hardley, Hythe Southampton S04 6YY (GB)**

(72) Inventor: **Jenkins, Derek Keith**
**7, Lakewood Road**
**Ashurst, Hampshire (GB)**

(74) Representative: **Jones, Alan John et al,**
**CARPMAELS & RANSFORD 43 Bloomsbury Square**
**London, WC1A 2RA (GB)**

Courier Press, Leamington Spa, England.

### Olefin polymerisation catalyst component and polymerisation process employing it

This invention relates to an olefin polymerisation catalyst component and to the polymerisation of olefins by means of an olefin polymerisation catalyst comprising such a component.

The reaction of isoprene with magnesium in polar solvents such as tetrahydrofuran (THF) is described by Yasuda, N., Nakano, Y., Natsukawa, J., Tani, H., in Macromolecules *11* (1978) p 586. Complexes having the formula Mg (isoprene)$_x$ where x=1, 2, 3 or 4 have been characterised. The complex usually contains two molecules of polar solvent, such as THF, coordinated with the magnesium. Similar complexes with butadiene have also been reported (see reference 30 in the above paper). It has been concluded that such complexes have a macrocyclic structure containing e.g., 25 members, five magnesium atoms, or 27 members, three magnesium atoms. We have found that an olefin polymerisation catalyst component can be prepared by reaction of titanium tetrachloride with a magnesium complex of a conjugated diene such as one of those just described.

According to the present invention an olefin polymerisation catalyst component comprises the reaction product of titanium tetrachloride with a magnesium complex of a conjugated diene. The invention also includes a process for the polymerisation of at least one olefin carried out by means of a catalyst comprising an olefin polymerisation catalyst component as just described and an organo aluminium component which is an aluminium trialkyl, an aluminium alkyl halide having an alkyl to halogen ratio of at least 1:1 or a mixture thereof.

Examples of suitable magnesium complexes of a conjugated diene are those wherein the conjugated diene is isoprene, butadiene, myrcene, diphenyl butadiene or a dialkyl butadiene wherein the alkyl groups have 1 to 5 cabon atoms. Magnesium-butadiene and magnesium-isoprene complexes are preferred. Generally such complexes are prepared in a polar solvent, such as an ether or cyclic ether (e.g. THF). The complexes so prepared generally contain a certain amount of coordinated polar solvent, e.g., a THF to magnesium ratio of at least 2:1, (i.e., 2:1 or more than 2:1). For use in olefin polymerisation it is preferred that the amount of polar compound used to prepare the magnesium-diene complex is kept to a minimum. The magnesium to diene ratio in the complex may be 1:1, 1:2, 1:3 or 1:4. Magnesium-isoprene-tetrahydrofuran complexes are preferred.

The olefin polymerisation catalyst component is prepared by reaction of titanium tetrachloride with the magnesium complex of a conjugated diene. The titanium to magnesium ratio of the reactants used is preferably from 1:1 to 1:2. The magnesium to titanium ratio in the catalyst component is 2 or less:1, preferably 1:1 to 2:1. A reaction temperature of 0 to 30°C is preferred.

The reaction to prepare the catalyst component is carried out in hydrocarbon solvent (e.g. toluene). It is preferred that the magnesium diene complex is added to titanium tetrachloride (both in hydrocarbon solution) to give the required magnesium to titanium ratio. The catalyst component (predominantly in the solid phase) is then recovered. However it may be used in the separated or unseparated form. An olefin polymerisation catalyst prepared from the catalyst component comprises, in addition, an organo aluminium component as cocatalyst, which is an aluminium trialkyl, an aluminium alkyl halide having an alkyl to halogen ratio of at least 1:1 or a mixture thereof. The alkyl groups in the organo aluminium component may have from 1 to 10 carbon atoms. Examples of suitable aluminium components which may be used as cocatalyst are aluminium triethyl, which is preferred and aluminium tri-n-butyl. Triisobutyl aluminium and aluminium diethyl chloride are other examples. The aluminium to titanium ratio may be e.g., 1:1 to 200 or more:1, e.g., 5:1 to 80:1.

The olefin polymerisation catalyst is used for the homo or copolymerisation of olefins. It is particularly effective for the polymerisation of ethylene. Polyethylene may be obtained in yields of at least equivalent to known commercial catalysts. A typical yield is of the order of 13 kilograms of polymer per gram titanium per hour per atmosphere. Polymerisation may be carried out at e.g., ambient temperature or at elevated temperatures. Preferred temperatures are 40°C to 60°C. Modification of the catalyst by inclusion of an electron donor particularly an ester or another oxygenated compound, such as an ether or a ketone, may be carried out if desired. A typical ester to use is ethyl benzoate.

The following Examples illustrate the invention.

In Examples 1 to 5 a catalyst prepared according to the following procedure was employed.

1.5 g magnesium in 12.5 ml tetrahydrofuran was treated under nitrogen with 0.1 g iodine to activate the metal and stirred until the colour disappeared. 30 ml dry toluene was added followed by 11.5 ml dry redistilled isoprene. The mixture was stirred for 3 days at 20°C then vacuum distilled, with further addition of toluene, until all free isoprene and tetrahydrofuran had been removed. About one third of the added magnesium had reacted with the isoprene to give a greenish solution. The product was transferred to a bottle containing glass balls and slowly treated with titanium tetrachloride in toluene at a ratio of titanium to magnesium of 1:1.5. The black brown product was dispersed by rolling in the bottle for 3 hours.

Example 1

4 mmol aluminium triethyl was added to 500 ml isooctane under nitrogen followed by the titanium product prepared as above (1.25 m mol based on titanium). Ethylene was passed through at 50°C and atmospheric pressure for 1 hour, yielding 76.1 g of polyethylene.

Example 2

Example 1 was repeated except that the amount of product employed was 0.25 m mol based on titanium. 77 g of polyethylene was obtained.

Example 3

Example 1 was repeated except that the amount of product employed was 0.09 m mol based on titanium. 45.1 g of polyethylene was obtained.

Example 4

Example 1 was repeated except that the amount of product employed was 0.024 m mol based on titanium. 14.6 g of polyethylene was obtained.

Example 5

Example 3 was repeated except that aluminium triisobutyl was used in place of aluminium triethyl. 11 g of polyethylene was obtained.

The above Examples were repeated using an ethylene propylene mixed feed giving a partially soluble ethylene propylene copolymer.

By a similar procedure to that described above, magnesium-myrcene and magnesium-diphenyl butadiene complexes in tetrahydrofuran (THF) were prepared and added to titanium tetrachloride in toluene in various molar ratios within the range Mg:Ti of 0.5:1 to 2:1. The product in each case was an active catalyst component for the polymerisation of ethylene using an aluminium triethyl co-catalyst (8 m mol $AlEt_3$ per litre; 0.05 m mol Ti; 50°C).

Claims

1. An olefin polymerisation catalyst component comprising the reaction product of titanium tetrachloride with a magnesium complex of a conjugated diene.

2. A catalyst component according to Claim 1 wherein the conjugated diene is selected from isoprene, butadiene, myrcene, diphenyl butadiene, and dialkyl butadienes wherein the alkyl groups have 1 to 5 carbon atoms.

3. A catalyst component according to Claim 1 or Claim 2 wherein the magnesium to diene ratio is selected from 1:1, 1:2, 1:3, and 1:4.

4. A catalyst component according to any preceding claim which comprises the reaction product of titanium tetrachloride with a magnesium-isoprene-polar solvent complex.

5. A catalyst component according to Claim 4 wherein the polar solvent is tetrahydrofuran in a molar ratio to magnesium of 2 or more:1.

6. A catalyst component according to Claim 4 or Claim 5 wherein the magnesium to titanium ratio is 2 or less:1.

7. A catalyst component according to Claim 6 wherein the magnesium to titanium ratio is 1:1 to 2:1.

8. A process for the polymerisation of at least one olefin carried out using a catalyst comprising an olefin polymerisation catalyst component according to any preceding claim and an organo aluminium component selected from an aluminium trialkyl, an aluminium alkyl halide having an alkyl to halogen ratio of at least 1:1, and a mixture thereof.

9. A process according to Claim 8 wherein the alkyl groups in the organo aluminium component have from 1 to 10 carbon atoms.

10. A process according to Claim 8 or Claim 9 wherein ethylene is homopolymerised.

Revendications

1. Composant de catalyseur de polymérisation d'oléfines, qui comprend le produit de réaction du tétrachlorure de titane avec un complexe de magnésium d'une diène conjugué.

2. Composant de catalyseur suivant la revendication 1, dans lequel le diène conjugué est choisi parmi l'isoprène, le butadiène, le myrcène, le diphénylbutadiène et les dialcoyl-butadiènes dont les radicaux alcoyl comptent 1 à 5 atomes de carbone.

3. Composant de catalyseur suivant la revendication 1 ou 2, dans lequel le rapport du magnésium au diène est choisi entre 1:1, 1:2, 1:3 et 1:4.

4. Composant de catalyseur suivant l'une quelconque des revendications précédentes, qui comprend le produit de réaction du tétrachlorure de titane avec un complexe magnésium-isoprène-solvant polaire.

5. Composant de catalyseur suivant la revendication 4, dans lequel le solvant polaire est le tétrahydrofuranne dans un rapport molaire au magnésium de 2 ou davantage:1.

6. Composant de catalyseur suivant la revendication 4 ou 5, dans lequel le rapport au magnésium au titane est de 2 sinon moins:1.

7. Composant de catalyseur suivant la revendication 6, dans lequel le rapport du magnésium au titane est de 1:1 à 2:1.

8. Procédé de polymérisation d'au moins une oléfine exécuté à l'aide d'un catalyseur comprenant un composant de catalyseur de polymérisation d'oléfines suivant l'une quelconques des revendications précédentes et un composant organoaluminique choisi parmi un trialcoylaluminium, un halogénure d'alcoylaluminium présentant un rapport d'alcoyle à halogène d'au moins 1:1 et un mélange de ceux-ci.

9. Procédé suivant la revendication 8, dans lequel les radicaux alcoyle du constituant organoaluminique comptent 1 à 10 atomes de carbone.

10. Procédé suivant la revendication 8 ou 9, dans lequel l'éthylène est homopolymérisé.

## Patentansprüche

1. Olefinpolymerisationskatalysatorkomponente, gekennzeichnet durch das Reaktionsprodukt von Titantetrachlorid mit einem Magnesiumkomplex eines konjugierten Diens.

2. Katalysatorkomponente nach Anspruch 1, dadurch gekennzeichnet, daß das konjugierte Dien aus Isopren, Butadien, Myrcen, Diphenylbutadien sowie Dialkylbutadienen, wobei die Alkylgruppen 1 bis 5 Kohlenstoffatome aufweisen, ausgewählt wird.

3. Katalysatorkomponente nach Anspruch 1 oder 2, dadurch gekennzeichnet, daß das Verhältnis Magnesium:Dien aus 1:1, 1:2, 1:3 und 1:4 ausgewählt ist.

4. Katalysatorkomponente nach einem der vorhergehenden Ansprüche, dadurch gekennzeichnet, daß sie aus dem Reaktionsprodukt von Titantetrachlorid mit einem Komplex aus Magnesium, Isopren und einem polaren Lösungsmittel besteht.

5. Katalysatorkomponente nach Anspruch 4, dadurch gekennzeichnet, daß das polare Lösungsmittel aus Tetrahydrofuran in einem Molverhältnis zu Magnesium von 2 oder mehr:1 besteht.

6. Katalysatorkomponente nach Anspruch 4 oder 5, dadurch gekennzeichnet, daß das Verhältnis Magnesium:Titan 2 oder weniger:1 beträgt.

7. Katalysatorkomponente nach Anspruch 6, dadurch gekennzeichnet, daß das Verhältnis Magnesium:Titan 1:1 bis 2:1 beträgt.

8. Verfahren zur Polymerisation von wenigstens einem Olefin unter Verwendung eines Katalysators mit einer Olefinpolymerisationskatalysatorkomponente gemäß einem der vorhergehenden Ansprüche und einer Organoaluminiumverbindung, ausgewählt aus Aluminiumtrialkyl, einem Aluminiumalkylhalogenid mit einem Alkyl:Halogenid-Verhältnis von wenigstens 1:1 oder einer Mischung davon.

9. Verfahren nach Anspruch 8, dadurch gekennzeichnet, daß die Alkylgruppen in der Organoaluminiumkomponente 1:10 Kohlenstoffatome aufweisen.

10. Verfahren nach Anspruch 8 oder 9, dadurch gekennzeichnet, daß Ethylen homopolymerisiert wird.